# EUROPEAN PATENT APPLICATION

(11) **EP 4 075 700 A1**
(43) Date of publication of application: **19.10.2022**
(21) Application number: 19958120.8
(22) Date of filing: 30.12.2019
(51) Int. Cl.: H04L 1/18, H04W 28/04, H04W 72/04

(54) **DATA SENDING METHOD AND DEVICE APPLIED TO BLUETOOTH COMMUNICATION**

(71) Applicant: Huawei Technologies Co., Ltd., Shenzhen, Guangdong 518129 (CN)
(72) Inventor: XIE, Zichen, Shenzhen, Guangdong 518129 (CN); GUO, Zhan, Shenzhen, Guangdong 518129 (CN); ZHOU, Kai, Shenzhen, Guangdong 518129 (CN)
(74) Representative: Pfenning, Meinig & Partner mbB
(86) International application number: PCT/CN2019/129996
(87) International publication number: WO 2021/134238

(57) **Abstract**

This application provides a data sending method and apparatus applicable to Bluetooth communication. A data sending method applicable to Bluetooth communication in this application includes: sending at least one first packet to a first receiving device by using a Bluetooth communication connection, where the at least one first packet is generated by using a first packet assembly manner; determining, based on a receiving status of at least one piece of feedback information sent by the first receiving device, to generate at least one second packet by using the first packet assembly manner or a second packet assembly manner, where the at least one piece of feedback information is an acknowledgment or a negative acknowledgment fed back by the first receiving device after receiving the at least one first packet; and sending the at least one second packet to the first receiving device by using the Bluetooth communication connection. The first packet assembly manner and the second packet assembly manner include any two of the following: channel coding of at least one channel coding level or non-channel coding. Embodiments of this application can improve communication efficiency and use performance of an electronic device.

## Description

### TECHNICAL FIELD

This application relates to wireless communication technologies, and in particular, to a data sending method and apparatus applicable to Bluetooth communication.

### BACKGROUND

With development of Internet and mobile communication technologies, a Bluetooth technology is widely applied. Convenient, flexible, and secure voice and data communication between different electronic devices with low costs and low power consumption can be implemented by using the Bluetooth technology. The voice and data communication between different electronic devices, may be, for example, between a mobile phone, an earphone, a stereo, a band, and a watch.

Application scenarios of the Bluetooth technology are increasing, and are becoming more complex. In a daily application scenario, there are not only numerous electronic devices having a Bluetooth function, but also more electronic devices that use a same communication frequency band as that of Bluetooth, for example, electronic devices using Wi-Fi. Different electronic devices interfere with each other during communication. Severe interference causes a plurality of retransmissions, thereby increasing power consumption of the electronic devices. For an electronic device sensitive to power consumption, for example, a Bluetooth device that has low power consumption and is miniaturized, for example, a wireless headphone or a watch, interference severely affects use performance of the electronic device.

### SUMMARY

This application provides a data sending method and apparatus applicable to Bluetooth communication, to improve communication efficiency and use performance of an electronic device.

According to a first aspect, this application provides a data sending method applicable to Bluetooth communication. The method may include: sending at least one first packet to a first receiving device by using a Bluetooth communication connection, where the at least one first packet is generated by using a first packet assembly manner; determining, based on a receiving status of at least one piece of feedback information sent by the first receiving device, to generate at least one second packet by using the first packet assembly manner or a second packet assembly manner, where the at least one piece of feedback information is an acknowledgment or a negative acknowledgment fed back by the first receiving device after receiving the at least one first packet; and sending the at least one second packet to the first receiving device by using the Bluetooth communication connection. The first packet assembly manner and the second packet assembly manner include any two of the following: channel coding of at least one channel coding level or non-channel coding.

In this implementation, whether to switch a packet assembly manner of the first receiving device is determined based on the receiving status, to implement adaptive adjustment of the packet assembly manner in a Bluetooth communication process, so as to ensure Bluetooth communication stability in a complex environment with interference, reduce a transmission latency, and improve communication efficiency and use performance of an electronic device.

In a possible design, the receiving status includes at least one of a received signal strength indicator, a packet loss rate, or a receiving correctness rate.

In a possible design, the determining, based on a receiving status of at least one piece of feedback information sent by the first receiving device, to generate at least one second packet by using the first packet assembly manner or a second packet assembly manner may include: determining, based on the received signal strength indicator of the at least one piece of feedback information within one or more preset time periods and the first packet assembly manner, whether to switch the packet assembly manner to the second packet assembly manner; and when it is determined not to switch the packet assembly manner to the second packet assembly manner, generating the at least one second packet by using the first packet assembly manner; or when it is determined to switch the packet assembly manner to the second packet assembly manner, generating the at least one second packet by using the second packet assembly manner.

In this implementation, whether to switch the packet assembly manner of the first receiving device is comprehensively determined based on the first packet assembly manner and the received signal strength indicator within the one or more preset time periods. This can avoid incorrect switching of the packet assembly manner, and improve Bluetooth communication stability.

In a possible design, the determining, based on the received signal strength indicator of the at least one piece of feedback information within one or more preset time periods and the first packet assembly manner, whether to switch the packet assembly manner to the second packet assembly manner includes: when the received signal strength indicator of the at least one piece of feedback information within the one or more preset time periods is less than a first threshold, and the first packet assembly manner belongs to a first type, determining to switch the packet assembly manner to a packet assembly manner that belongs to a second type; or when the received signal strength indicator of the at least one piece of feedback information within the one or more preset time periods is greater than a fourth threshold, and the first packet assembly manner belongs to a second type, determining to switch the packet assembly manner to a packet assembly manner that belongs to a first type.

The packet assembly manner that belongs to the first type includes non-channel coding, and the packet assembly manner that belongs to the second type includes channel coding at any channel coding level; or the packet assembly manner that belongs to the first type includes channel coding at a first channel coding level, and the packet assembly manner that belongs to the second type includes channel coding at a second channel coding level, where the first channel coding level is lower than the second channel coding level.

In this implementation, when the received signal strength indicator of the at least one piece of feedback information within the one or more preset time periods is less than the first threshold, and the packet assembly manner of the first receiving device is a packet assembly manner that belongs to the first type, the packet assembly manner of the first receiving device is switched to the second packet assembly manner, where the second packet assembly manner is a packet assembly manner that belongs to the second type, to ensure Bluetooth communication stability in a complex environment with interference and reduce a transmission latency. When the received signal strength indicator of the at least one piece of feedback information within the one or more preset time periods is greater than the fourth threshold, and the packet assembly manner of the first receiving device is a packet assembly manner that belongs to the second type, the packet assembly manner of the first receiving device is switched to the second packet assembly manner, where the second packet assembly manner is a packet assembly manner that belongs to the first type, to reduce power consumption of the sending device and improve use performance of the sending device.

In a possible design, the determining, based on a receiving status of at least one piece of feedback information sent by the first receiving device, to generate at least one second packet by using the first packet assembly manner or a second packet assembly manner may include: determining, based on the packet loss rate or the receiving correctness rate of the at least one piece of feedback information within a plurality of preset time periods and the first packet assembly manner, whether to switch the packet assembly manner to the second packet assembly manner; and when it is determined not to switch the packet assembly manner to the second packet assembly manner, generating the at least one second packet by using the first packet assembly manner; or when it is determined to switch the packet assembly manner to the second packet assembly manner, the at least one second packet is generated by using the second packet assembly manner.

In a possible design, the determining, based on the packet loss rate or the receiving correctness rate of the at least one piece of feedback information within a plurality of preset time periods and the first packet assembly manner, whether to switch the packet assembly manner to the second packet assembly manner includes: when the packet loss rate in each preset time period is greater than a second threshold, and the first packet assembly manner belongs to a first type, determining to switch the packet assembly manner to a packet assembly manner that belongs to a second type; or when the packet loss rate within each preset time period is less than a fifth threshold, and the first packet assembly manner belongs to a second type, determining to switch the packet assembly manner to a packet assembly manner that belongs to a first type.

In a possible design, the determining, based on the packet loss rate or the receiving correctness rate of the at least one piece of feedback information within a plurality of preset time periods and the first packet assembly manner, whether to switch the packet assembly manner to the second packet assembly manner includes: when the receiving correctness rate in each preset time period is less than a third threshold, and the first packet assembly manner belongs to a first type, determining to switch the packet assembly manner to a packet assembly manner that belongs to a second type; or when the receiving correctness rate in each preset time period is greater than a sixth threshold, and the first packet assembly manner belongs to a second type, determining to switch the packet assembly manner to a packet assembly manner that belongs to a first type.

In a possible design, the method may further include: when it is determined to generate the at least one second packet by using the second packet assembly manner, the method may further include: adjusting a communication periodicity of a second receiving device, where the second receiving device is a receiving device synchronized with the first receiving device, the communication periodicity is a time interval between two adjacent third packets sent to the second receiving device, and the third packet and the second packet have same packet content; and
sending at least one third packet to the second receiving device through the Bluetooth communication connection based on the adjusted communication periodicity of the second receiving device.

In this implementation, synchronized transmission between the first receiving device and the second receiving device is implemented by adjusting the communication periodicity of the second receiving device.

In a possible design, the adjusting a communication periodicity of a second receiving device may include: increasing or decreasing the communication periodicity of the second receiving device.

In a possible design, the increasing or decreasing the communication periodicity of the second receiving device may include: when the packet assembly manner of the first receiving device is switched from a packet assembly manner that belongs to the first type to a packet assembly manner that belongs to the second type, increasing the communication periodicity of the second receiving device; or when the packet assembly manner of the first receiving device is switched from a packet assembly manner that belongs to the second type to a packet assembly manner that belongs to the first type, decreasing the communication periodicity of the second device.

In a possible design, the method may further include: determining, based on a packet assembly manner of the second receiving device, whether to adjust the communication periodicity of the second receiving device; and when the packet assembly manner of the second receiving device is a packet assembly manner that belongs to the second type, skipping adjusting the communication periodicity of the second receiving device; or when the packet assembly manner of the second receiving device is a packet assembly manner that belongs to the first type, performing the step of adjusting the communication periodicity of the second receiving device.

In a possible design, when determining to generate the at least one second packet by using the second packet assembly manner, and the at least one second packet includes a second data packet and a second control packet, the method may further include: generating the second control packet by using the second packet assembly manner, and generating the second data packet by using the first packet assembly manner; or generating the second data packet by using the second packet assembly manner, and generating the second control packet by using the first packet assembly manner.

In a possible design, the method may further include: determining, based on a transmission requirement of the data link and the control link respectively, to generate the second data packet and the second control packet by using the second packet assembly manner or the first packet assembly manner. The transmission requirement includes at least one of a real-time transmission requirement or a transmission reliability requirement.

In this implementation, packet assembly manners to be used are separately determined for different real-time transmission requirements and transmission reliability requirements of different logical links (for example, a control link and a data link) on a same physical link, to meet transmission requirements of the different logical links.

According to a second aspect, an embodiment of this application provides a data sending apparatus applicable to Bluetooth communication. The apparatus may be an electronic device, or may be a chip in an electronic device. The apparatus has a function of implementing the electronic device in the foregoing embodiment. The function may be implemented by hardware, or may be implemented by hardware executing corresponding software. The hardware or software includes one or more units corresponding to the foregoing functions.

The apparatus may be used as a transmit end.

In a possible design, when the apparatus is an electronic device, the apparatus may include a processing module and a transceiver module. The processing module may be, for example, a processor, the transceiver module may be, for example, a transceiver, and the transceiver may include a radio frequency circuit and a baseband circuit.

Optionally, the apparatus may further include a storage unit, and the storage unit may be, for example, a memory. When the apparatus includes the storage unit, the storage unit is configured to store computer-executable instructions. The processing module is connected to the storage unit, and the processing module executes the computer-executable instructions stored in the storage unit, so that the electronic device performs the data sending method according to any one of the possible designs of the first aspect.

In another possible design, when the apparatus is a chip in the electronic device, the chip includes a processing module and a transceiver module. The processing module may be, for example, a processor, and the transceiver module may be, for example, an input/output interface, a pin, or a circuit on the chip. Optionally, the apparatus may further include a storage unit. The processing module may execute computer-executable instructions stored in the storage unit, so that the electronic device performs the data sending method according to any one of the possible designs of the first aspect.

Optionally, the storage unit is a storage unit in the chip, such as a register or a cache. Alternatively, the storage unit may be a storage unit that is outside the chip and that is in the electronic device, such as a read-only memory (read-only memory, ROM for short) or another type of static storage device that can store static information and instructions, or a random access memory (random access memory, RAM for short).

Any processor mentioned above may be a general-purpose central processing unit (Central Processing Unit, CPU), a microprocessor, an application-specific integrated circuit (application-specific integrated circuit, ASIC), or one or more integrated circuits for controlling program executions of the Bluetooth communication method according to the foregoing aspect.

According to a third aspect, a computer storage medium is provided. The computer storage medium stores program code, and the program code is used to instruct to execute instructions for the method according to any one of the first aspect or possible designs of the first aspect.

According to a fourth aspect, a processor is provided. The processor is configured to be coupled to a memory, and is configured to perform the method according to any one of the first aspect or possible designs of the first aspect.

According to a fifth aspect, a computer program product including instructions is provided. When the instructions are run on a computer, the computer is enabled to perform the method according to any one of the first aspect or possible designs of the first aspect.

According to a sixth aspect, a communication system is provided. The system includes: a sending device and at least one receiving device that performs Bluetooth communication with the sending device. The sending device is configured to perform the data sending method according to any design of the first aspect.

According to the data sending method and apparatus applicable to Bluetooth communication in embodiments of this application, the sending device sends the at least one first packet to the first receiving device by using the Bluetooth communication connection, where the first packet is generated by using the first packet assembly manner. The sending device determines, based on the receiving status of the at least one piece of feedback information, to generate the at least one second packet by using the first packet assembly manner or the second packet assembly manner, where the at least one piece of feedback information is the acknowledgment or the negative acknowledgment fed back by the first receiving device after receiving the at least one first packet. The sending device sends the at least one second packet to the first receiving device by using the Bluetooth communication connection. The first packet assembly manner and the second packet assembly manner include any two of the following: non-channel coding or channel coding of at least one channel coding level. This implements adaptive adjustment of the packet assembly manner in a Bluetooth communication process, ensures Bluetooth communication stability in a complex environment with interference, reduces a transmission latency, and improves communication efficiency and use performance of an electronic device.

### BRIEF DESCRIPTION OF DRAWINGS

FIG. 1 is a schematic diagram of an application scenario according to an embodiment of this application;
FIG. 2 is a flowchart of a Bluetooth communication method according to an embodiment of this application;
FIG. 3A is a flowchart of a method for determining whether to switch a packet assembly manner according to an embodiment of this application;
FIG. 3B is a flowchart of a method for determining whether to switch a packet assembly manner according to an embodiment of this application;
FIG. 3C is a flowchart of a method for determining whether to switch a packet assembly manner according to an embodiment of this application;
FIG. 4A is a schematic diagram of a scenario 1 according to an embodiment of this application;
FIG. 4B is a schematic diagram of a processing process of a Bluetooth communication method in the scenario 1 according to an embodiment of this application;
FIG. 5 is a schematic diagram of a structure of an electronic device according to an embodiment of this application;
FIG. 6 is a schematic diagram of a process of another Bluetooth communication method according to an embodiment of this application;
FIG. 7 is a schematic diagram in which a mobile phone performs Bluetooth communication with a headphone A and a headphone B according to an embodiment of this application;
FIG. 8 is a flowchart of another Bluetooth communication method according to an embodiment of this application;
FIG. 9A is a schematic diagram of a processing process of a Bluetooth communication method in a scenario 2 according to an embodiment of this application;
FIG. 9B is a schematic diagram of a processing process of a Bluetooth communication method in a scenario 3 according to an embodiment of this application;
FIG. 9C is a schematic diagram of a processing process of a Bluetooth communication method in a scenario 4 according to an embodiment of this application;
FIG. 10 is a schematic diagram of a packet on a control link and a packet on a data link according to an embodiment of this application;
FIG. 11 is a schematic diagram of a structure of a data sending apparatus applicable to Bluetooth communication according to an embodiment of this application; and
FIG. 12 is a schematic diagram of a structure of a data sending apparatus applicable to Bluetooth communication according to an embodiment of this application.

### DESCRIPTION OF EMBODIMENTS

Terms such as "first" and "second" in this application are only used for distinguishing and description, but cannot be understood as an indication or implication of relative importance, or an indication or implication of an order. In addition, the terms "include", "have", and any variant thereof are intended to cover non-exclusive inclusion, for example, include a series of steps or units. Methods, systems, products, or devices do not need to be limited to those steps or units that are clearly listed, but may include other steps or units that are not clearly listed or inherent to these processes, methods, products, or devices.

It should be understood that in this application, "at least one (item)" refers to one or more and "a plurality of' refers to two or more. The term "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" generally represents an "or" relationship between the associated objects. "At least one of the following items (pieces)" or a similar expression thereof means any combination of these items, including a single item (piece) or any combination of a plurality of items (pieces). For example, at least one of a, b, and c may indicate a, b, c, "a and b", "a and c", "b and c", or "a, b, and c", where a, b, and c may be singular or plural.

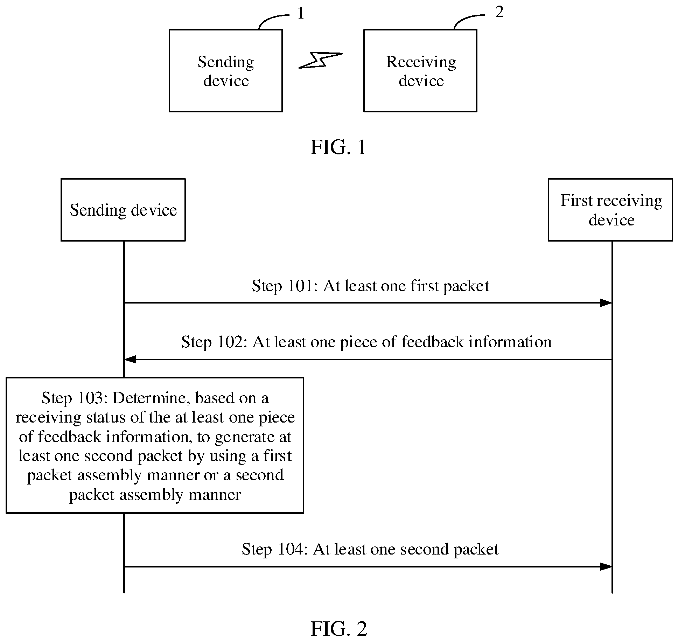

FIG. 1 is a schematic diagram of an application scenario according to an embodiment of this application. As shown in FIG. 1, the application scenario includes a sending device and a receiving device. The sending device is communicatively connected to the receiving device by using a Bluetooth function. For example, Bluetooth communication modules are disposed in both the sending device and the receiving device. The Bluetooth communication module of the sending device may receive a to-be-sent signal from a processor of the sending device, perform frequency modulation and amplification on the to-be-sent signal, and convert the to-be-sent signal into an electromagnetic wave for radiation by using an antenna. The Bluetooth communication module of the receiving device receives the electromagnetic wave by using an antenna of the receiving device, performs frequency modulation and filtering processing on the electromagnetic wave signal, and sends the processed signal to a processor of the receiving device, to implement Bluetooth communication. In a Bluetooth communication process, the data sending method in embodiments of this application can be used to improve communication efficiency and use performance of an electronic device.

It should be noted that both the sending device and the receiving device in embodiments of this application may include various electronic devices having a wireless communication function. The electronic device may be a handheld device, a vehicle-mounted device, a wearable device (for example, a smartwatch, a smart band, a wireless headphone, an augmented reality device, a virtual reality device, or smart glasses), a computing device, or another processing device connected to a wireless modem, and various forms of user equipment (user equipment, UE), a mobile station (mobile station, MS), a smart home device (for example, a smart refrigerator, a smart television, or a smart router), or the like.

In an example, when any foregoing electronic device A sends data to any foregoing electronic device B, the electronic device A is a sending device, and the electronic device B is a receiving device. In another example, when any foregoing electronic device A receives data sent by any foregoing electronic device B, the electronic device A is a receiving device, and the electronic device B is a sending device.

The following describes embodiments of this application in detail.

FIG. 2 is a flowchart of a Bluetooth communication method according to an embodiment of this application. This embodiment relates to a sending device and a first receiving device. As shown in FIG. 2, the method in this embodiment may include the following steps.

Step 101: The sending device sends at least one first packet to the first receiving device by using a Bluetooth communication connection.

In this embodiment of this application, a packet (packet) sent by the sending device to the first receiving device is referred to as the "first packet". The first packet may include a packet header and packet content. The packet content may carry data or a control command. The data may be audio data, video data, text data, picture data, or the like.

A packet (packet) in this application may alternatively be referred to as a frame (frame), a service data packet (traffic packet), data (data), a data packet (data packet), a segment (segment), or the like. This is not limited in this application. In this application, the packet (packet) is used as an example for description.

Before sending the first packet to the first receiving device, the sending device needs to perform Bluetooth encryption on original data to be sent (for example, original audio data), and assemble the encrypted data by using a first packet assembly manner, to generate the foregoing first packet. The first packet assembly manner may be channel coding at any channel coding level or non-channel coding.

The first receiving device receives, by using the Bluetooth communication connection, the at least one first packet sent by the sending device. The first receiving device may generate at least one piece of feedback information based on packet content of the at least one first packet that is correctly received or that is incorrectly received. The at least one piece of feedback information is an acknowledgment (ACK) or a negative acknowledgment (NACK) that is fed back by the first receiving device after receiving the at least one first packet.

Step 102: The first receiving device sends the at least one piece of feedback information to the sending device by using the Bluetooth communication connection.

The sending device receives, by using the Bluetooth communication connection, the at least one piece of feedback information sent by the first receiving device.

Step 103: The sending device determines, based on a receiving status of the at least one piece of feedback information, to generate at least one second packet by using the first packet assembly manner or a second packet assembly manner.

In other words, the sending device determines, based on the receiving status of the at least one piece of feedback information, whether to switch a packet assembly manner of the first receiving device. The packet assembly manner of the first receiving device is a packet assembly manner used when the sending device sends data to the first receiving device, for example, the foregoing packet assembly manner for generating the second packet. When determining to switch the packet assembly manner of the first receiving device, the sending device generates the at least one second packet by using the second packet assembly manner. When determining not to switch the packet assembly manner of the first receiving device, the sending device generates the at least one second packet by using the first packet assembly manner.

The first packet assembly manner and the second packet assembly manner may include any two of the following: channel coding of at least one channel coding level or non-channel coding. For example, the first packet assembly manner is channel coding (channel coding at any channel coding level), and the second packet assembly manner is non-channel coding.

The receiving status of the at least one piece of feedback information is used to indicate Bluetooth communication quality between the first receiving device and the sending device. The Bluetooth communication quality between the first receiving device and the sending device is affected by factors such as a distance between the first receiving device and the sending device and interference from an environment in which the first receiving device and the sending device are located.

For example, the receiving status may include at least one of a received signal strength indicator (received signal strength indication, RSSI), a packet loss rate (for example, determining based on a packet error rate (packet error rate, PER) that indicates whether receiving is successful), or a receiving correctness rate (for example, determining based on a cyclic redundancy check (cyclic redundancy check, CRC) that indicates whether receiving is correct).

The sending device may determine, based on the receiving status and the packet assembly manner of the first receiving device, whether to switch the packet assembly manner of the first receiving device. For example, if the packet assembly manner of the first receiving device is non-channel coding, the sending device may determine, based on the receiving status, whether to switch from non-channel coding to channel coding. For another example, if the packet assembly manner of the first receiving device is channel coding, the sending device may determine, based on the receiving status, whether to switch from channel coding to non-channel coding.

It can be learned that the sending device in this embodiment of this application may determine, based on Bluetooth communication quality between the sending device and the first receiving device, whether to switch the packet assembly manner of the first receiving device, for example, determine to switch from non-channel coding to channel coding, or determine to switch from low-level channel coding to high-level channel coding.

In some embodiments, the sending device may determine, based on the receiving status of at least one piece of feedback information within one or more preset time periods, whether to switch the packet assembly manner of the first receiving device. The preset time period may be 5 ms, 10 ms, or the like. For example, if a receiving correctness rate in a preset time period 1 is less than a threshold, a receiving correctness rate in a preset time period 2 is also less than the threshold, and a receiving correctness rate in a preset time period 3 is still less than the threshold, the sending device may determine, based on the receiving correctness rates in the three time periods, to switch the packet assembly manner of the first receiving device. To be specific, Bluetooth communication quality is determined based on the receiving status within the one or more preset time periods. For example, if the receiving correctness rates in three preset time periods are low, it may be determined that the Bluetooth communication quality is poor. In this case, the sending device needs to switch the packet assembly manner of the first receiving device, to ensure transmission stability of the first receiving device in a complex environment with interference, and reduce a transmission latency.

Step 104: The sending device sends the at least one second packet to the first receiving device by using the Bluetooth communication connection.

When determining to switch the packet assembly manner of the first receiving device, the sending device may assemble Bluetooth-encrypted data by using the switched packet assembly manner (for example, the second packet assembly manner), to generate the second packet in step 104. The packet content in the second packet in step 104 may be different or the same as the packet content in the first packet in step 101 (for example, retransmission). The sending device sends the at least one second packet to the first receiving device by using the Bluetooth communication connection.

In some embodiments, when determining not to switch the packet assembly manner of the first receiving device, the sending device sends the at least one second packet to the first receiving device by using an original packet assembly manner (for example, the first packet assembly manner). For example, the sending device may assemble the Bluetooth-encrypted data by using the first packet assembly manner to generate the at least one second packet, and send the at least one second packet to the first receiving device by using the Bluetooth communication connection.

In this embodiment, the sending device sends the at least one first packet to the first receiving device by using the Bluetooth communication connection, where the first packet is generated by using the first packet assembly manner. The sending device determines, based on the receiving status of the at least one piece of feedback information, to generate the at least one second packet by using the first packet assembly manner or the second packet assembly manner. The at least one piece of feedback information is the acknowledgment or the negative acknowledgment fed back by the first receiving device after receiving the at least one first packet. The sending device sends the at least one second packet to the first receiving device by using the Bluetooth communication connection. The first packet assembly manner and the second packet assembly manner include any two of the following: non-channel coding or channel coding of at least one channel coding level. This implements adaptive adjustment of the packet assembly manner in a Bluetooth communication process, ensures Bluetooth communication stability in a complex environment with interference, reduces a transmission latency, and improves communication efficiency and use performance of an electronic device.

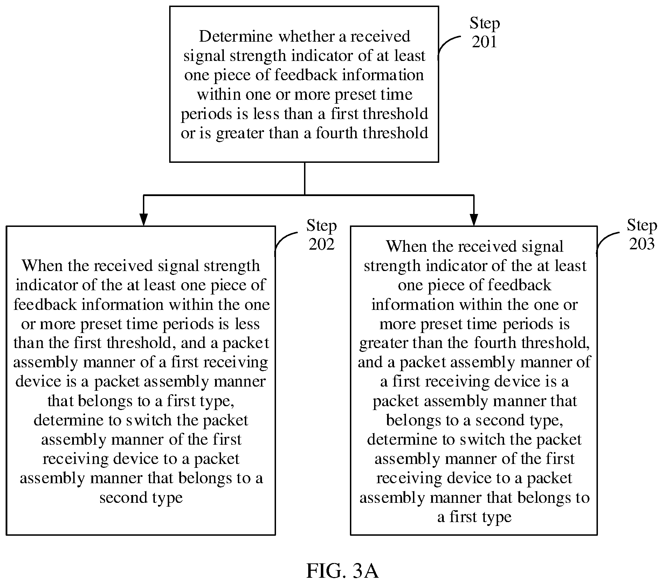

FIG. 3A is a flowchart of a method for determining whether to switch the packet assembly manner according to an embodiment of this application. This embodiment is an implementation of step 103. The receiving status in this embodiment is a received signal strength indicator. As shown in FIG. 3A, the method according to this embodiment may include the following steps.

Step 201: Determine whether the received signal strength indicator of the at least one piece of feedback information within the one or more preset time periods is less than a first threshold, or is greater than a fourth threshold.

The first threshold is less than or equal to the fourth threshold, and specific values of the first threshold and the fourth threshold may be flexibly set based on a requirement.

For example, the at least one piece of feedback information may be separately carried in packets sent by the first receiving device to the sending device. The sending device may determine, based on the received signal strength indicator of the packet and the packet assembly manner of the first receiving device, whether to switch the packet assembly manner of the first receiving device, that is, determine a packet assembly manner for generating the second packet.

Step 202: When the received signal strength indicator of the at least one piece of feedback information within the one or more preset time periods is less than the first threshold, and the packet assembly manner of the first receiving device is a packet assembly manner that belongs to a first type, determine to switch the packet assembly manner of the first receiving device to a packet assembly manner that belongs to a second type.

When received signal strength indicators within one or more preset time periods are all less than the first threshold, it may be determined that Bluetooth communication quality between the sending device and the first receiving device is poor. The packet assembly manner of the first receiving device (that is, the first packet assembly manner) is a packet assembly manner that belongs to the first type. In this case, the packet assembly manner of the first receiving device may be switched to the second packet assembly manner, where the second packet assembly manner is a packet assembly manner that belongs to the second type, to ensure Bluetooth communication stability in a complex environment with interference, and reduce a transmission latency.

The packet assembly manner that belongs to the first type includes non-channel coding, and the packet assembly manner that belongs to the second type includes channel coding at any channel coding level; or the packet assembly manner that belongs to the first type includes channel coding at a first channel coding level, and the packet assembly manner that belongs to the second type includes channel coding at a second channel coding level, where the first channel coding level is lower than the second channel coding level.

Step 203: When the received signal strength indicator of the at least one piece of feedback information within the one or more preset time periods is greater than the fourth threshold, and the packet assembly manner of the first receiving device is a packet assembly manner that belongs to a second type, determine to switch the packet assembly manner of the first receiving device to a packet assembly manner that belongs to a first type.

When receiving statuses within one or more preset time periods are all greater than the fourth threshold, it may be determined that Bluetooth communication quality between the sending device and the first receiving device is good. The packet assembly manner of the first receiving device (that is, the first packet assembly manner) is a packet assembly manner that belongs to the second type. In this case, the packet assembly manner of the first receiving device may be switched, to be specific, may be switched to the second packet assembly manner, where the second packet assembly manner is a packet assembly manner that belongs to the first type, to reduce power consumption of the sending device.

In this embodiment, whether the received signal strength indicator of the at least one piece of feedback information within the one or more preset time periods is less than the first threshold or greater than the fourth threshold is determined. When the received signal strength indicator of the at least one piece of feedback information within the one or more preset time periods is less than the first threshold, and the packet assembly manner of the first receiving device is a packet assembly manner that belongs to the first type, the packet assembly manner of the first receiving device is switched to the second packet assembly manner, where the second packet assembly manner is a packet assembly manner that belongs to the second type, to ensure Bluetooth communication stability in a complex environment with interference and reduce a transmission latency. When the received signal strength indicator of the at least one piece of feedback information within the one or more preset time periods is greater than the fourth threshold, and the packet assembly manner of the first receiving device is a packet assembly manner that belongs to the second type, the packet assembly manner of the first receiving device is switched to the second packet assembly manner, where the second packet assembly manner is a packet assembly manner that belongs to the first type, to reduce power consumption of the sending device and improve use performance of the sending device.

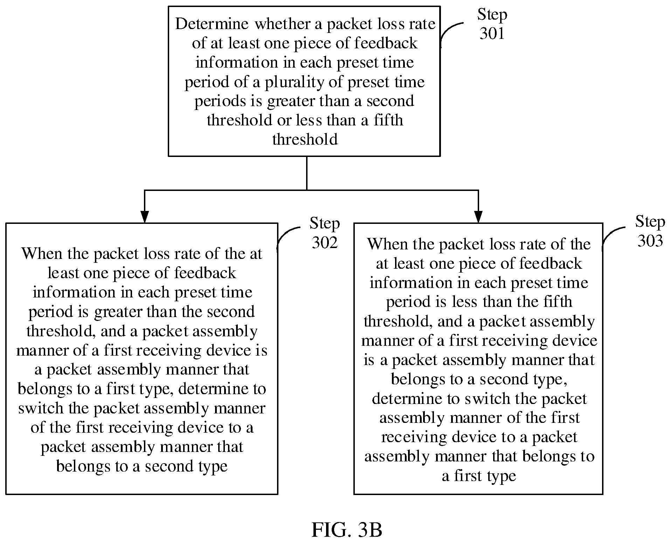

FIG. 3B is a flowchart of another method for determining whether to switch the packet assembly manner according to an embodiment of this application. This embodiment is an implementation of step 103. The receiving status in this embodiment is a packet loss rate. As shown in FIG. 3B, the method in this embodiment may include the following steps.

Step 301: Separately determine whether the packet loss rate of the at least one piece of feedback information in each of a plurality of preset time periods is greater than a second threshold or less than a fifth threshold.

The second threshold may be greater than or equal to the fifth threshold, and specific values of the second threshold and the fifth threshold may be flexibly set based on a requirement.

For example, the at least one piece of feedback information may be separately carried in packets sent by the first receiving device to the sending device. The sending device may determine, based on the packet assembly manner of the first receiving device and a packet loss rate of a packet carrying the feedback information, whether to switch the packet assembly manner of the first receiving device, that is, determine a packet assembly manner for generating the second packet.

Step 302: When the packet loss rate of the at least one piece of feedback information in each preset time period is greater than the second threshold, and the packet assembly manner of the first receiving device is a packet assembly manner that belongs to a first type, determine to switch the packet assembly manner of the first receiving device to a packet assembly manner that belongs to a second type.

When the packet loss rate in each of the plurality of preset time periods is greater than the second threshold, it may be determined that Bluetooth communication quality between the sending device and the first receiving device is poor. The packet assembly manner of the first receiving device (that is, the first packet assembly manner) is a packet assembly manner that belongs to the first type. In this case, the packet assembly manner of the first receiving device may be switched to the second packet assembly manner, where the second packet assembly manner is a packet assembly manner that belongs to the second type, to ensure Bluetooth communication stability in a complex environment with interference, and reduce a transmission latency.

Step 303: When the packet loss rate of the at least one piece of feedback information in each preset time period is less than the fifth threshold, and the packet assembly manner of the first receiving device is a packet assembly manner that belongs to a second type, determine to switch the packet assembly manner of the first receiving device to a packet assembly manner that belongs to a first type.

When the packet loss rate of the at least one piece of feedback information in each of the plurality of preset time periods is less than the fifth threshold, it may be determined that Bluetooth communication quality between the sending device and the first receiving device is good. The packet assembly manner of the first receiving device is a packet assembly manner that belongs to the second type. In this case, the packet assembly manner of the first receiving device may be switched, to be specific, may be switched to the second packet assembly manner, where the second packet assembly manner is a packet assembly manner that belongs to the first type, to reduce power consumption of the sending device.

In this embodiment, whether the packet loss rate of the at least one piece of feedback information in each of the plurality of preset time periods is greater than the second threshold or less than the fifth threshold is determined. When the packet loss rate of the at least one piece of feedback information in each of the plurality of preset time periods is greater than the second threshold, and the packet assembly manner of the first receiving device is a packet assembly manner that belongs to the first type, the packet assembly manner of the first receiving device is switched to the second packet assembly manner, where the second packet assembly manner is a packet assembly manner that belongs to the second type, to ensure Bluetooth communication stability in a complex environment with interference and reduce a transmission latency. When the packet loss rate of the at least one piece of feedback information in each of the plurality of preset time periods is less than the fifth threshold, and the packet assembly manner of the first receiving device is a packet assembly manner that belongs to the second type, the packet assembly manner of the first receiving device is switched to the second packet assembly manner, where the second packet assembly manner is a packet assembly manner that belongs to the first type, to reduce power consumption of the sending device and improve use performance of the sending device.

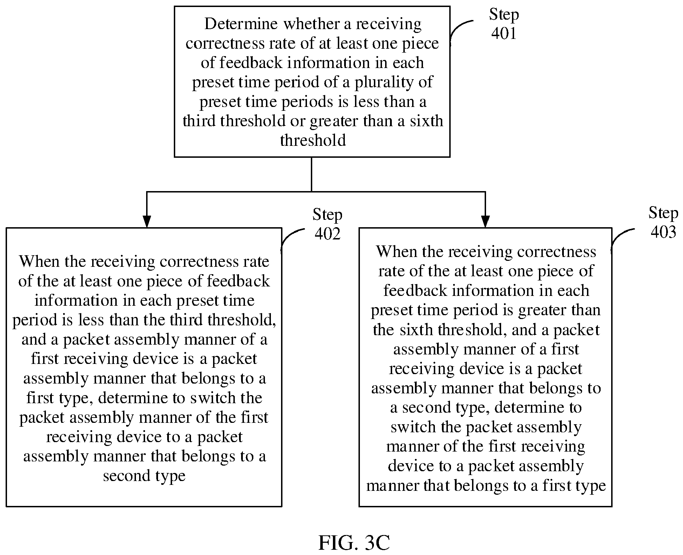

FIG. 3C is a flowchart of another method for determining whether to switch the packet assembly manner according to an embodiment of this application. This embodiment is an implementation of step 103. The receiving status in this embodiment is a receiving correctness rate. As shown in FIG. 3B, the method in this embodiment may include the following steps.

Step 401: Separately determine whether the receiving correctness rate of the at least one piece of feedback information in each of a plurality of preset time periods is less than a third threshold or greater than a sixth threshold.

The third threshold may be less than or equal to the sixth threshold, and specific values of the third threshold and the sixth threshold may be flexibly set based on a requirement.

For example, the at least one piece of feedback information may be separately carried in packets sent by the first receiving device to the sending device. The sending device may determine, based on the packet assembly manner of the first receiving device and a receiving correctness rate of a packet carrying the feedback information, whether to switch the packet assembly manner of the first receiving device, that is, determine a packet assembly manner for generating the second packet.

Step 402: When the receiving correctness rate of the at least one piece of feedback information in each preset time period is less than the third threshold, and the packet assembly manner of the first receiving device is a packet assembly manner that belongs to a first type, determine to switch the packet assembly manner of the first receiving device to a packet assembly manner that belongs to a second type.

When the receiving correctness rate in each of the plurality of preset time periods less than the third threshold, it may be determined that Bluetooth communication quality between the sending device and the first receiving device is poor. The packet assembly manner of the first receiving device (that is, the first packet assembly manner) is a packet assembly manner that belongs to the first type. In this case, the packet assembly manner of the first receiving device may be switched to the second packet assembly manner, where the second packet assembly manner is a packet assembly manner that belongs to the second type, to ensure Bluetooth communication stability in a complex environment with interference, and reduce a transmission latency.

Step 403: When the receiving correctness rate of the at least one piece of feedback information in each preset time period is greater than the sixth threshold, and the packet assembly manner of the first receiving device is a packet assembly manner that belongs to a second type, determine to switch the packet assembly manner of the first receiving device to a packet assembly manner that belongs to a first type.

When the receiving correctness rate of the at least one piece of feedback information in each of the plurality of preset time periods is greater than the sixth threshold, it may be determined that Bluetooth communication quality between the sending device and the first receiving device is good. The packet assembly manner of the first receiving device is a packet assembly manner that belongs to the second type. In this case, the packet assembly manner of the first receiving device may be switched, to be specific, may be switched to the second packet assembly manner, where the second packet assembly manner is a packet assembly manner that belongs to the first type, to reduce power consumption of the sending device.

In this embodiment, whether the receiving correctness rate of the at least one piece of feedback information in each of the plurality of preset time periods is less than the third threshold or greater than the sixth threshold is determined. When the receiving correctness rate of the at least one piece of feedback information in each of the plurality of preset time periods is less than the third threshold, and the packet assembly manner of the first receiving device is a packet assembly manner that belongs to the first type, the packet assembly manner of the first receiving device is switched to the second packet assembly manner, where the second packet assembly manner is a packet assembly manner that belongs the second type, to ensure Bluetooth communication stability in a complex environment with interference and reduce a transmission latency. When the receiving correctness rate of the at least one piece of feedback information in each of the plurality of preset time periods is greater than the sixth threshold, and the packet assembly manner of the first receiving device is a packet assembly manner that belongs to the second type, the packet assembly manner of the first receiving device is switched to the second packet assembly manner, where the second packet assembly manner is a packet assembly manner that belongs to the first type, to reduce power consumption of the sending device and improve use performance of the sending device.

It should be noted that, whether to switch the packet assembly manner of the first receiving device may be determined in combination of FIG. 3A to FIG. 3C. For example, whether to switch the packet assembly manner of the first receiving device is determined comprehensively based on a received signal strength and the packet loss rate. Examples are not described one by one in embodiments of this application.

The following uses a scenario 1 as an example to describe the foregoing Bluetooth communication method.

### Scenario 1

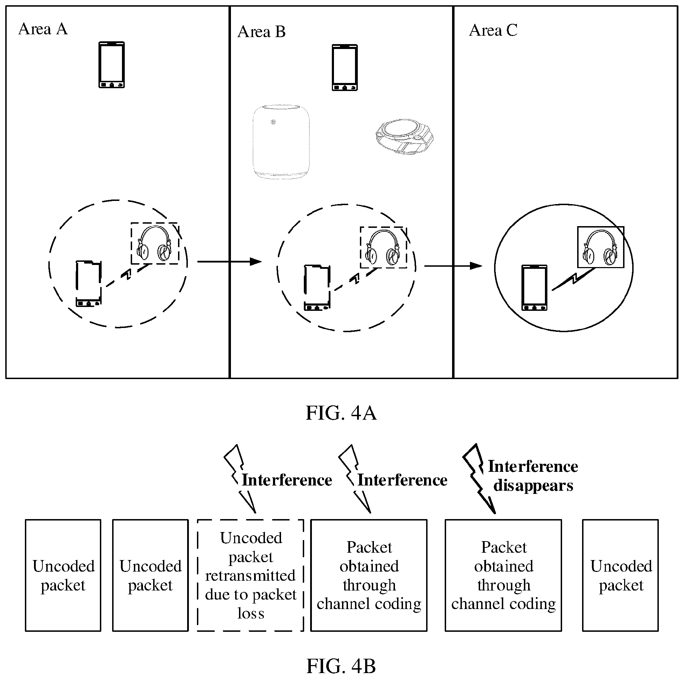

FIG. 4A is a schematic diagram of the scenario 1 according to an embodiment of this application. As shown in FIG. 4A, a user uses a Bluetooth headphone to make a phone call, play music, or transmit data when moving. A sending device is a mobile phone used by the user, and a receiving device is the Bluetooth headphone. The user moves from an area A to an area C, where the area A and the area C are low-interference environments, and the area B is a high-interference environment. In a moving process, the sending device and the receiving device may adaptively adjust a packet assembly manner in a Bluetooth communication process by using the foregoing Bluetooth communication method in the embodiments of this application, to ensure Bluetooth communication stability in a complex environment with interference, reduce a transmission latency, and improve communication efficiency and use performance of an electronic device.

For example, FIG. 4B is a schematic diagram of a processing process of a Bluetooth communication method in the scenario 1 according to an embodiment of this application. As shown in FIG. 4B, first two packets sent by the sending device to the receiving device are uncoded packets. In other words, when the sending device and the receiving device are in the area A, because the area A is a low-interference area, Bluetooth communication is performed in the area A by using the uncoded packet. This can avoid power consumption and power loss caused by using an encoded packet. A third packet shown in FIG. 4B is an uncoded packet for retransmission due to packet loss. When the sending device and the receiving device move to the area B, retransmission of a lost packet occurs due to interference. After detecting the interference by using the method steps in the foregoing embodiments, the sending device may switch to a packet assembly manner using channel coding. Compared with the uncoded packet, for the packet assembly manner using channel coding, air interface overheads and power consumption are slightly increased, power consumption of retransmission is greatly reduced, and service continuity is improved, thereby improving user experience. As shown in FIG. 4B, after the uncoded packet is retransmitted due to packet loss, the sending device switches from non-channel coding to channel coding, and sends a first packet obtained through channel coding, where channel coding may be channel coding at any channel coding level. For a second packet obtained through channel coding, it indicates that when the sending device and the receiving device move to the area C, the sending device may detect an environment change status, that is, interference cancellation by using the method steps in the foregoing embodiments. The sending device switches to non-channel coding, that is, a last uncoded packet shown in FIG. 4B. In this way, unnecessary power consumption increase and transmission latency caused by continued use of channel coding in the low-interference area can be avoided.

In this embodiment, for two Bluetooth physical devices (the mobile phone and the Bluetooth headphone) in point-to-point communication, the packet assembly manner is adaptively switched in real time based on a change of an application scenario, so that communication efficiency and use performance of an electronic device can be improved.

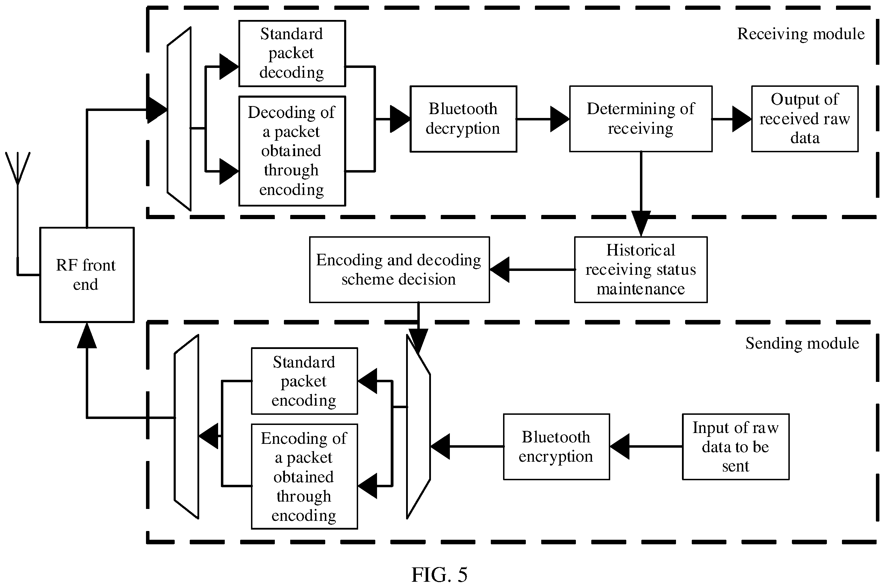

FIG. 5 is a schematic diagram of a structure of an electronic device according to an embodiment of this application. The electronic device may be used as a sending device, or may be used as a receiving device. As shown in FIG. 5, the electronic device may include a receiving module, a historical receiving status maintenance model, an encoding and decoding scheme decision module, a sending module, an RF front end, and an antenna.

After receiving a packet from an air interface, the receiving module decodes the packet based on a preset decoding packet type, decrypts the packet according to a Bluetooth standard, and then determines a receiving status. The receiving module outputs various data related to the receiving status (for example, an RSSI, a CRC indicating whether the receiving is correct, and a PER indicating whether the receiving is successful) to the historical receiving status maintenance module, and outputs the decoded data (that is, output of received raw data shown in FIG. 5) for system processing.

In the historical receiving status maintenance module, determining is performed based on parameters such as a packet receiving success rate and a signal energy strength (which indicates a distance) within a time period (for example, step 103 or step 201 described above). When it is determined to switch a packet assembly manner, the packet assembly manner is switched to channel coding at a higher or lower channel coding level (coding rate) or non-channel coding.

Each time before a packet needs to be sent, after data is encrypted by using Bluetooth in the sending module, a decision about whether to switch the packet assembly manner is read from the encoding and decoding scheme decision module, and packet assembly is performed according to the decision.

It should be noted that both the sending device and the receiving device in embodiments of this application may use the structure shown in FIG. 5. To be specific, on the basis of the embodiment shown in FIG. 2,

FIG. 3A, FIG. 3B, or FIG. 3C, the receiving device may also determine a receiving status, and switch a packet assembly manner of the sending device in a process similar to step 103 and step 104. The packet assembly manner of the sending device is used by the receiving device to send a packet to the sending device by using the packet assembly manner. An implementation principle and an implementation effect thereof are the same, and details are not described herein again.

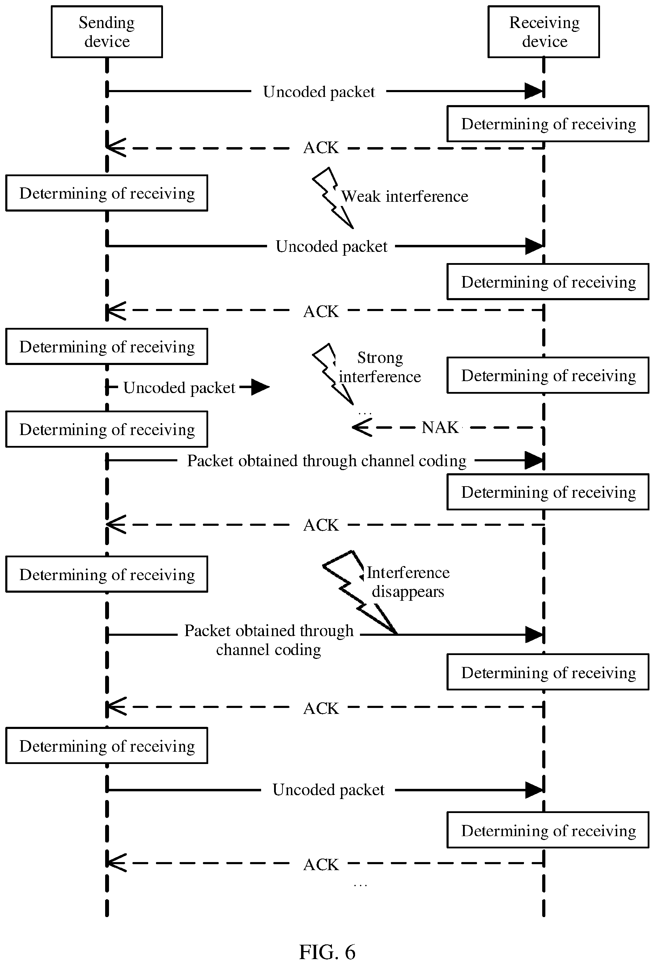

FIG. 6 is a schematic diagram of a process of another Bluetooth communication method according to an embodiment of this application. This embodiment relates to a sending device and a receiving device. An application scenario of the method in this embodiment is the scenario shown in FIG. 4A. As shown in FIG. 6, in an initial state, both the receiving device and the sending device interact by using an uncoded packet, and determine a receiving status after receiving (determining of receiving is shown in FIG. 5). The receiving device and the sending device determine, based on parameters such as an RSSI collected during the receiving process and a PER indicating whether the receiving is successful, whether to switch a packet assembly manner.

When there is weak interference (for example, between the area A and the area B) in a communication environment, after receiving, determining of receiving is performed, and it is determined that the weak interference does not affect a success rate of packet receiving and sending. Therefore, a packet assembly manner does not need to be switched.

However, when strong interference occurs in a subsequent communication environment (for example, the sending device and the receiving device enters an area B), continuous packet loss occurs due to environment interference and a non-channel coding manner. After separately performing determining of receiving, the sending device and the receiving device determine to switch the packet assembly manner, and perform communication in a channel coding manner.

After the channel coding manner is used, sensitivity of the receiving device is improved, and both devices restore normal receiving and sending success rates. However, a packet length becomes longer, which causes power consumption and a latency.

After knowing, through determining of receiving, that interference disappears (for example, the sending device and the receiving device enters the area C), the sending device and the receiving device switch back to a manner of non-channel coding for communication, to reduce air interface overheads and power consumption.

In the foregoing embodiments, the Bluetooth communication method in embodiments of this application is described by using the sending device and one receiving device. The Bluetooth communication method in embodiments of this application is further applicable to Bluetooth communication between a sending device and a plurality of receiving devices. The plurality of receiving devices may be associated or may not be associated. "Associating" in the embodiments specifically means that synchronous playing is required, for example, synchronous playing of audio data and/or video data. For example, when a mobile phone is connected to one or two Bluetooth headphones through Bluetooth to play music, the mobile phone is further connected to a watch or a band through Bluetooth, or even is connected to another mobile phone through Bluetooth to perform data transmission. Similarly, when one Bluetooth headphone is connected to the mobile phone through Bluetooth, the Bluetooth headphone is also connected to another headphone through Bluetooth to perform services such as data transmission and playing synchronization. In some scenarios, the Bluetooth headphone also maintains a Bluetooth connection to the watch or the band. The two headphones are associated with each other, and the two headphones and the mobile phone may form a communication system.

In the foregoing scenario, there may be a huge difference in distances, environmental interference, and the like between a plurality of different physical devices connected to one main device. For example, a mobile phone is in a left back pocket of trousers and communicates with two Bluetooth headphones in two ears. When other conditions are the same, a retransmission rate of the Bluetooth headphone in the right ear is greater than a retransmission rate of the Bluetooth headphone in the left ear. A method same as that in the foregoing embodiment is used. That is, a sending device independently maintains a "historical receiving status maintenance" module for each receiving device, and each receiving device independently maintains a "historical receiving status maintenance" module. For a plurality of different links, the sending module separately determines, by using the modules, whether to use channel coding. In this way, service stability in an entire application scenario can be improved, and power consumption can be reduced.

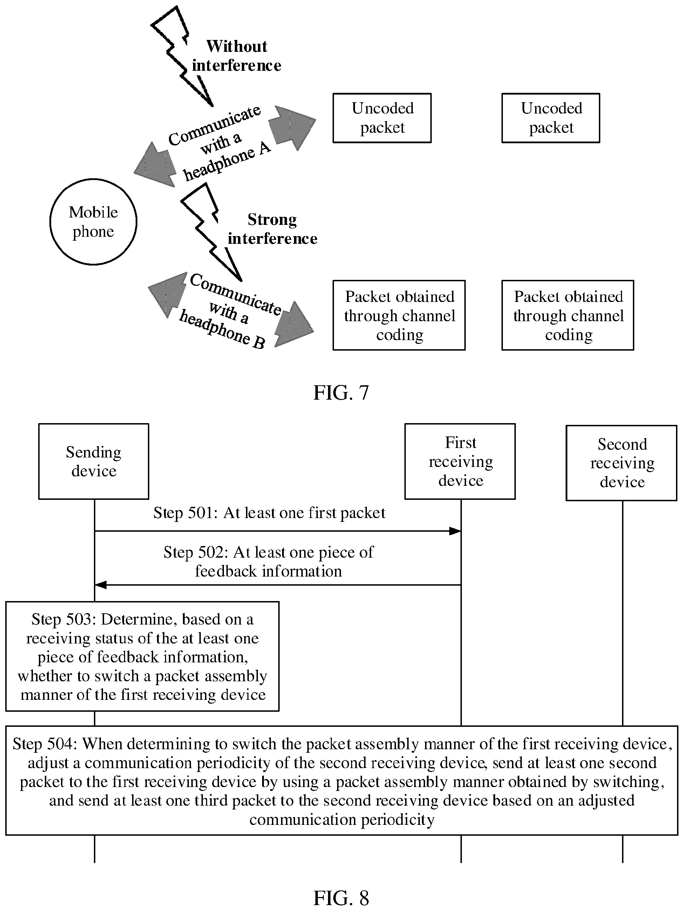

For example, FIG. 7 is a schematic diagram of Bluetooth communication between a mobile phone, a headphone A, and a headphone B according to an embodiment of this application. As shown in FIG. 7, for the headphone A and the headphone B, the mobile phone separately determines, by using the Bluetooth communication method described in the foregoing embodiment, whether to switch a packet assembly manner. For example, the mobile phone determines that the headphone A uses non-channel coding, and the mobile phone sends an uncoded packet to the headphone A by using a packet assembly manner of non-channel coding; and the mobile phone determines that the headphone B uses channel coding, the mobile phone performs packet assembly by using a packet assembly manner of channel coding and sends a packet obtained through channel coding to the headphone B. In other words, the headphone A and the headphone B are used as two different physical devices, and may perform packet assembly and communication in different packet assembly manners, to implement a flexible Bluetooth communication manner, so as to ensure data transmission stability and use performance of the physical devices.

For different physical devices that are associated (for example, two Bluetooth headphones), the sending device switches a packet assembly manner of a first receiving device by using the Bluetooth communication method in the foregoing embodiment, and the sending device needs to adjust, by using a method in an embodiment shown in FIG. 8, a communication periodicity of a second receiving device associated with the first receiving device. For a specific implementation, refer to explanations and descriptions in the following embodiment.

FIG. 8 is a flowchart of another Bluetooth communication method according to an embodiment of this application. As shown in FIG. 8, this embodiment relates to a sending device, a first receiving device, and a second receiving device. The first receiving device is synchronized with the second receiving device. As shown in FIG. 8, the method in this embodiment may include the following steps.

Step 501: The sending device sends at least one first packet to the first receiving device by using a Bluetooth communication connection.

Step 502: The first receiving device sends at least one piece of feedback information to the sending device by using the Bluetooth communication connection.

Step 503: The sending device determines, based on a receiving status of the at least one piece of feedback information, whether to switch a packet assembly manner of the first receiving device.

For descriptions of step 501 to step 503, refer to step 101 to step 103 in the embodiment shown in FIG. 2. Details are not described herein again.

Step 504: When determining to switch the packet assembly manner of the first receiving device, the sending device adjusts a communication periodicity of the second receiving device, sends at least one second packet to the first receiving device by using a packet assembly manner obtained by switching, and sends at least one third packet to the second receiving device based on an adjusted communication periodicity.

For example, it is assumed that the packet assembly manner of the first receiving device is switched from non-channel coding to channel coding, and a packet assembly manner of the second receiving device is non-channel coding. Because the packet assembly manner of the first receiving device changes, a communication periodicity of the first receiving device also changes correspondingly. The sending device adjusts the communication periodicity of the second receiving device, so that transmission is synchronized between the first receiving device and the second receiving device. The sending device sends the at least one third packet to the second receiving device by using the adjusted communication periodicity and the packet assembly manner of non-channel coding, and sends the at least one second packet to the first receiving device by using a packet assembly manner of channel coding. In other words, data transmission is synchronized between the sending device and the first receiving device.

In some embodiments, an implementation of adjusting the communication periodicity of the second receiving device is to increase or decrease the communication periodicity of the second receiving device.

For example, when the packet assembly manner of the first receiving device is switched from a packet assembly manner that belongs to the first type to a packet assembly manner that belongs to the second type, the communication periodicity of the second receiving device is increased; or when the packet assembly manner of the first receiving device is switched from a packet assembly manner that belongs to the second type to a packet assembly manner that belongs to the first type, a communication periodicity of the second device is decreased.

In some embodiments, the sending device may further determine, based on the packet assembly manner of the second receiving device, whether to adjust the communication periodicity of the second receiving device. When the packet assembly manner of the second receiving device is a packet assembly manner that belongs to the second type, the communication periodicity of the second receiving device is not adjusted. When the packet assembly manner of the second receiving device is a packet assembly manner that belongs to the first type, the step of adjusting the communication periodicity of the second receiving device is performed.

In this embodiment, the sending device sends the at least one first packet to the first receiving device by using the Bluetooth communication connection, where the first packet is generated by using the first packet assembly manner. The sending device determines, based on the receiving status of the at least one piece of feedback information, to generate the at least one second packet by using the first packet assembly manner or the second packet assembly manner, where the at least one piece of feedback information is the acknowledgment or the negative acknowledgment fed back by the first receiving device after receiving the at least one first packet. The sending device sends the at least one second packet to the first receiving device by using the Bluetooth communication connection. The first packet assembly manner and the second packet assembly manner include any two of the following: non-channel coding or channel coding of at least one channel coding level. This implements adaptive adjustment of the packet assembly manner in a Bluetooth communication process, ensures Bluetooth communication stability in a complex environment with interference, reduces a transmission latency, and improves communication efficiency and use performance of an electronic device.

Synchronized data transmission between the first receiving device and the second receiving device is implemented by adjusting the communication periodicity of the second receiving device.

The Bluetooth communication method shown in FIG. 8 is described below by using examples of a scenario 2, a scenario 3, and a scenario 4.

### Scenario 2

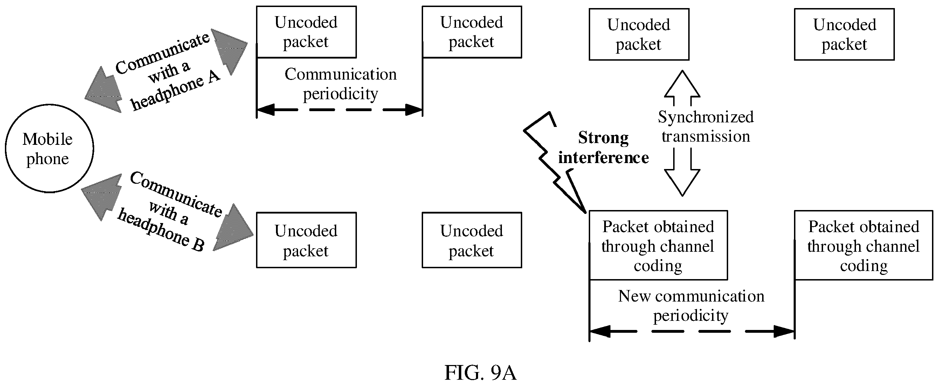

FIG. 9A is a schematic diagram of a processing process of a Bluetooth communication method in the scenario 2 according to an embodiment of this application. As shown in FIG. 9A, the mobile phone performs data transmission with the headphone A and the headphone B. In an initial state, for both the headphone A and the headphone B, the mobile phone uses non-channel coding. In other words, first two packets from left to right in FIG. 9A are uncoded packets. Then, because strong interference occurs between the mobile phone and the headphone B, the sending device determines, by using the Bluetooth communication method according to the foregoing embodiment, to switch a packet assembly manner of the headphone B to channel coding. As shown in FIG. 9A, the third and fourth packets sent by the mobile phone to the headphone B are packets obtained through channel coding, and the third and fourth packets sent by the mobile phone to the headphone A are uncoded packets. The packet assembly manner of the headphone B is switched, so that after the packet assembly manner of the headphone B is switched to channel coding, a size of a packet length changes, and therefore a communication interval also changes. A packet assembly manner of the headphone A is not switched, so that before sending the third packet and the fourth packet, the sending device further needs to adjust a communication periodicity of the headphone A by using the manner in the embodiment shown in FIG. 8, so that transmission is synchronized between the headphone A and the headphone B.

For example, the mobile phone simultaneously sends stereo data to two headphones (the headphone A and the headphone B) by using Bluetooth, and each headphone receives only left or right mono-channel data. When a communication periodicity of either of the two headphones (the headphone A and the headphone B) changes due to interference or any other reason, a communication periodicity of the other headphone with the mobile phone needs to be adjusted, to ensure synchronization (playing synchronization) for receiving data between the two headphones.

### Scenario 3

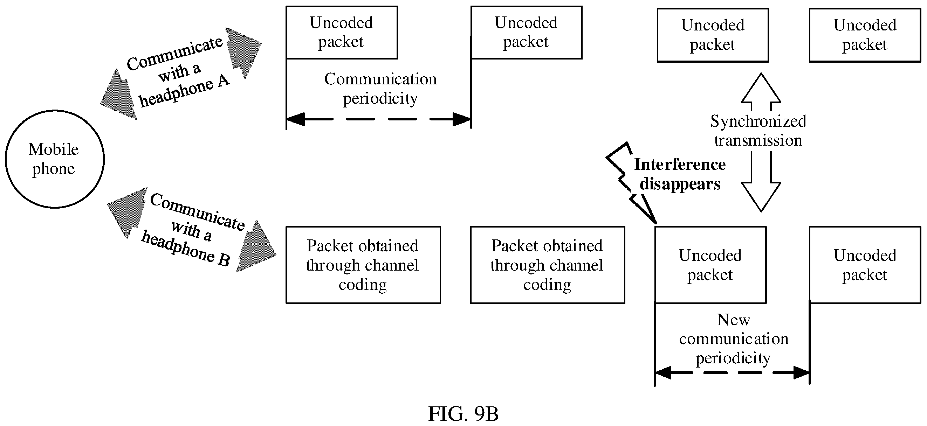

FIG. 9B is a schematic diagram of a processing process of a Bluetooth communication method in the scenario 3 according to an embodiment of this application. As shown in FIG. 9B, the mobile phone performs data transmission with the headphone A and the headphone B. In an initial state, the mobile phone uses non-channel coding for the headphone A. To be specific, first two packets from left to right in a first row in FIG. 9B are uncoded packets. The mobile phone uses channel coding for the headphone B. To be specific, first two packets from left to right in a second row in FIG. 9B are packets obtained through channel coding. Then, because interference between the mobile phone and the headphone B disappears, the sending device determines, by using the Bluetooth communication method according to the foregoing embodiment, to switch a packet assembly manner of the headphone B to non-channel coding. As shown in FIG. 9B, the third and fourth packets sent by the mobile phone to the headphone B are uncoded packets, and the third and fourth packets sent by the mobile phone to the headphone A are uncoded packets. The packet assembly manner of the headphone B is switched, so that after the packet assembly manner of the headphone B is switched to non-channel coding, a size of a packet length is shortened, and therefore a communication interval and a packet aggregation status also change. A packet assembly manner of the headphone A is not switched, so that before sending the third packet and the fourth packet, the sending device further needs to adjust a communication periodicity of the headphone A by using the manner in the embodiment shown in FIG. 8, so that transmission is synchronized between the headphone A and the headphone B.

For example, in an initial state, due to a distance, interference, or the like between the mobile phone and the two headphones, the mobile phone and the headphone B determine to use channel coding to transmit data and audio. When environment interference changes, for the mobile phone and the headphone B, non-channel coding is switched to, a packet length is shortened, and therefore a communication interval and a packet aggregation status also change. To ensure synchronization (playing synchronization) for receiving data between the two headphones, a communication periodicity (for example, a data link periodicity) between the other headphone A with the mobile phone also needs to be adjusted.

### Scenario 4

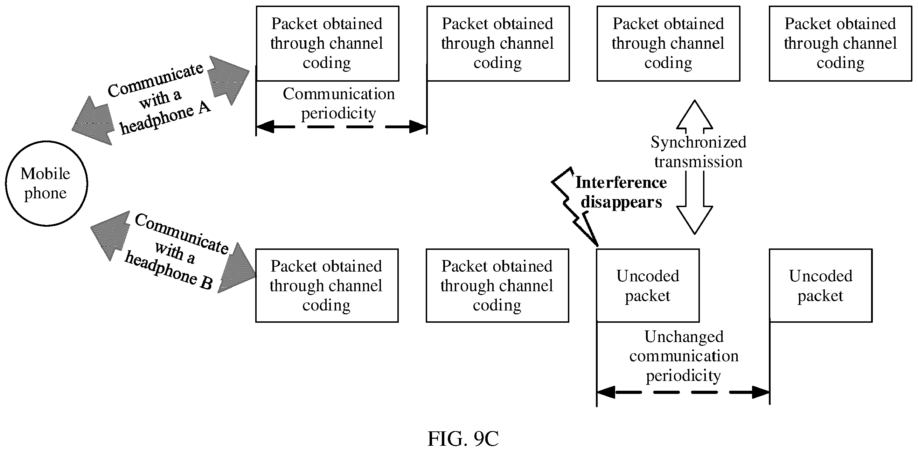

FIG. 9C is a schematic diagram of a processing process of a Bluetooth communication method in the scenario 4 according to an embodiment of this application. As shown in FIG. 9C, the mobile phone performs data transmission with the headphone A and the headphone B. In an initial state, for both the headphone A and the headphone B, the mobile phone uses channel coding. In other words, first two packets from left to right in FIG. 9 are packets obtained through channel coding. Then, because interference between the mobile phone and the headphone B is eliminated, the sending device determines, by using the Bluetooth communication method according to the foregoing embodiment, to switch a packet assembly manner of the headphone B to non-channel coding. As shown in FIG. 9C, the third and fourth packets sent by the mobile phone to the headphone B are packets without channel coding, and the third and fourth packets sent by the mobile phone to the headphone A are packets obtained through channel coding. The packet assembly manner of the headphone B is switched to non-channel coding, and the packet assembly manner of the headphone A is not switched, and is still channel coding. Therefore, a communication periodicity of the headphone B may be kept unchanged, so that transmission is synchronized between the headphone A and the headphone B.

For example, in an initial state, the mobile phone and two headphones (the headphone A and the headphone B) both determine to perform synchronized transmission of data and audio by using channel coding due to a distance, interference, and the like. When environment interference changes, non-channel coding between the mobile phone and the headphone B is switched to. In this case, a communication environment between the mobile phone and the headphone A does not change. Therefore, channel coding continues to be used between the mobile phone and the headphone A. To ensure synchronization (playing synchronization) for receiving data between two ears, a communication periodicity (a data link periodicity) also remains unchanged.

In this embodiment of this application, a packet assembly manner may be further determined based on distinguishing of different logical links under a same physical link. For example, the different logical links include a control link and a data link.

For example, on the basis of any one of the foregoing embodiments, when determining to generate the at least one second packet by using the second packet assembly manner, the sending device generates at least one second control packet by using the second packet assembly manner, and generates at least one second data packet by using the first packet assembly manner. In other words, the packet assembly manner obtained by switching is used for a packet on the control link, and the packet assembly manner before switching is used for a packet on the data link.

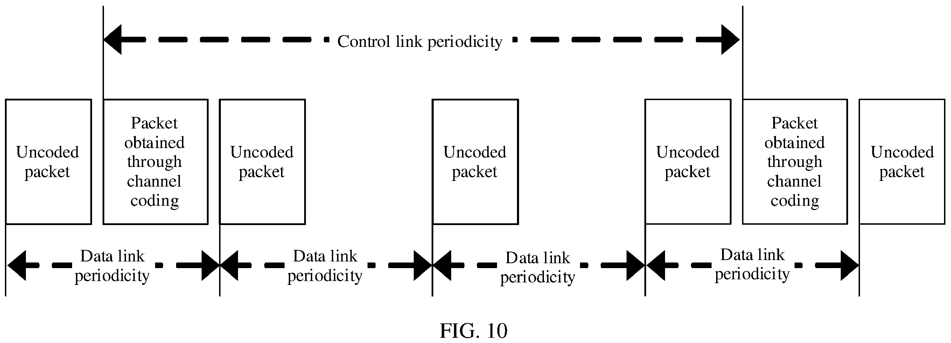

For example, in a call process, between the mobile phone and Bluetooth headphones, in addition to an uplink and downlink data (voice) link, a control link that has functions of volume adjustment, answering and hanging up, and parameter adjustment also needs to be maintained. It is assumed that the mobile phone determines to switch a packet assembly manner of the Bluetooth headphone from non-channel coding to channel coding. The mobile phone may switch a packet assembly manner of a control link of the Bluetooth headphone to channel coding, and still use non-channel coding for a data link of the Bluetooth headphone. For example, in the foregoing scenario, to ensure that a Bluetooth connection is not interrupted after interference occurs, it is very necessary to use channel coding for the control link. A packet obtained through channel coding shown in FIG. 10 is a packet on the control link. However, generally, voice (for example, a game or a video) has a high real-time requirement or high-definition audio has a high duty cycle. In this scenario, a latency and a packet loss caused by an increase of a packet length after channel coding are used is as unacceptable. In addition, additional power consumption overheads are caused when channel coding is used. Therefore, channel coding may not be used for the data link. In other words, an uncoded packet shown in FIG. 10 is a packet on the data link. Therefore, even for different logical links of a same physical device, different packet assembly manners can be used.

For another example, on the basis of any one of the foregoing embodiments, when determining to generate the at least one second packet by using the second packet assembly manner, the sending device generates at least one second data packet by using the second packet assembly manner, and generates at least one second control packet by using the first packet assembly manner. In other words, the packet assembly manner obtained by switching is used for a packet on the data link, and the packet assembly manner before switching is used for a packet on the control link.

In some embodiments, the sending device may determine, based on a transmission requirement of a data link and a transmission requirement of a control link of the receiving device respectively, whether to use, for the data link and/or the control link, a packet assembly manner obtained by switching. The transmission requirement includes at least one of a real-time transmission requirement or a transmission reliability requirement.

The Bluetooth standard has the following characteristics: A communication periodicity and a communication time point have been determined for two or more logical links corresponding to a same physical link in a link establishment process. For example, communication periodicities of a data link and a control link shown in FIG. 10 are completely different (or may be the same), and time points are also different (or may be the same). Therefore, for two ends of Bluetooth communication, at each specific time point, even if no communication is performed in advance and a packet header is not decoded, a logical link type corresponding to a packet received or sent at the time point can be clearly known.

With the use of the foregoing characteristics of Bluetooth, in this embodiment of this application, a packet assembly manner to be used is determined based on different real-time transmission requirements and transmission reliability requirements of different logical links on a same physical link. FIG. 10 is still used as an example. For a physical link in a low-latency scenario, for a data link, a communication periodicity needs to be short and packet assembly is performed in a non-channel coding manner (even in a scenario with interference). On the other hand, a control link controls a service status (for example, answering a call, hanging up a call, or adjusting volume by using a headphone). Although there is no excessively high requirement on a latency, normal communication (no packet loss) needs to be ensured even in an environment with interference. Therefore, for the control link, packet assembly in a channel coding manner is used. In addition, unlike a communication standard such as Wi-Fi, each logical link does not need to determine, by using a packet header, whether a subsequent packet content uses channel coding, so that communication efficiency can be improved. According to the differentiated method in this embodiment of this application, a latency can be reduced to a maximum extent, power consumption can be reduced, and communication reliability of key interaction can be ensured.

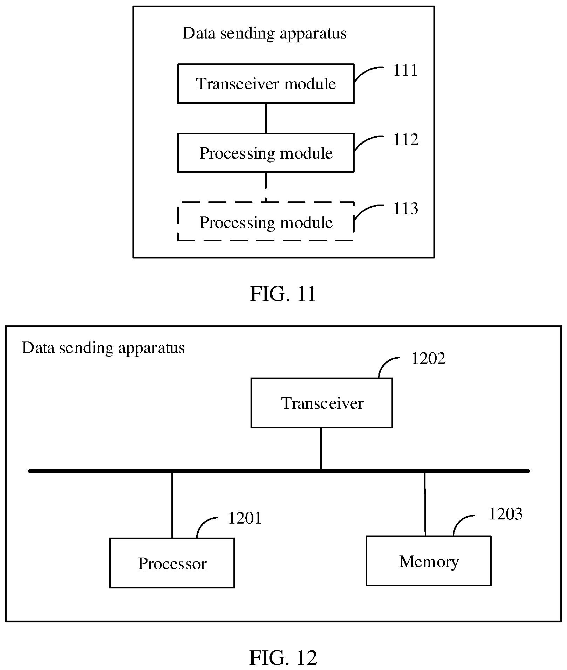

An embodiment of this application further provides a data sending apparatus applicable Bluetooth communication, configured to perform the method steps performed by the sending device or the processor in the foregoing method embodiments. As shown in FIG. 11, the data sending apparatus may include a transceiver module 111 and a processing module 112.

The transceiver module 111 is configured to send at least one first packet to a first receiving device by using a Bluetooth communication connection, where the at least one first packet is generated by using a first packet assembly manner.

The processing module 112 is coupled to the transceiver module 111, and is configured to: determine, based on a receiving status of at least one piece of feedback information received by the transceiver module 111 and sent by the first receiving device, to generate at least one second packet by using the first packet assembly manner or a second packet assembly manner, where the at least one piece of feedback information is an acknowledgment or a negative acknowledgment fed back by the first receiving device after receiving the at least one first packet.

The transceiver module 111 is further configured to send the at least one second packet to the first receiving device by using the Bluetooth communication connection.

The first packet assembly manner and the second packet assembly manner include any two of the following: channel coding of at least one channel coding level or non-channel coding.

In some embodiments, the receiving status includes at least one of a received signal strength indicator, a packet loss rate, or a receiving correctness rate.

In some embodiments, the processing module 112 is configured to: determine, based on the received signal strength indicator of the at least one piece of feedback information within one or more preset time periods and the first packet assembly manner, whether to switch a packet assembly manner to the second packet assembly manner; and when determining not to switch the packet assembly manner to the second packet assembly manner, generate the at least one second packet by using the first packet assembly manner; or when determining not to switch the packet assembly manner to the second packet assembly manner, generate the at least one second packet by using the second packet assembly manner.

In some embodiments, the processing module 112 is configured to: when the received signal strength indicator of the at least one piece of feedback information within the one or more preset time periods is less than a first threshold, and the first packet assembly manner belongs to a first type, determine to switch the packet assembly manner to a packet assembly manner that belongs to a second type; or when the received signal strength indicator of the at least one piece of feedback information within the one or more preset time periods is greater than a fourth threshold, and the first packet assembly manner belongs to a second type, determine to switch the packet assembly manner to a packet assembly manner that belongs to a first type.

The packet assembly manner that belongs to the first type includes non-channel coding, and the packet assembly manner that belongs to the second type includes channel coding at any channel coding level; or the packet assembly manner that belongs to the first type includes channel coding at a first channel coding level, and the packet assembly manner that belongs to the second type includes channel coding at a second channel coding level, where the first channel coding level is lower than the second channel coding level.

In some embodiments, the processing module 112 is configured to: determine, based on the packet loss rate or the receiving correctness rate of the at least one piece of feedback information within a plurality of preset time periods and the first packet assembly manner, whether to switch a packet assembly manner to the second packet assembly manner; and when determining not to switch the packet assembly manner to the second packet assembly manner, generate the at least one second packet by using the first packet assembly manner; or when determining not to switch the packet assembly manner to the second packet assembly manner, generate the at least one second packet by using the second packet assembly manner.

In some embodiments, the processing module 112 is configured to: when the packet loss rate within each preset time period is greater than a second threshold, and the first packet assembly manner belongs to a first type, determine to switch the packet assembly manner to a packet assembly manner that belongs to a second type; or when the packet loss rate within each preset time period is less than a fifth threshold, and the first packet assembly manner belongs to a second type, determine to switch the packet assembly manner to a packet assembly manner that belongs to a first type.

In some embodiments, the processing module 112 is further configured to: when the receiving correctness rate within each preset time period is less than a third threshold, and the first packet assembly manner belongs to a first type, determine to switch the packet assembly manner to a packet assembly manner that belongs to a second type; or when the receiving correctness rate in each preset time period is greater than a sixth threshold, and the first packet assembly manner belongs to a second type, determine to switch the packet assembly manner to a packet assembly manner that belongs to a first type.

In some embodiments, the processing module 112 is further configured to: when determining to generate the at least one second packet by using the second packet assembly manner, adjust a communication periodicity of a second receiving device, where the second receiving device is a receiving device synchronized with the first receiving device, the communication periodicity is a time interval between two adjacent third packets sent to the second receiving device, and the third packet and the second packet have same packet content; control, based on the adjusted communication periodicity of the second receiving device, the transceiver module 111 to send at least one third packet to the second receiving device by using the Bluetooth communication connection.

In some embodiments, the processing module 112 is configured to increase or decrease the communication periodicity of the second receiving device.

In some embodiments, the processing module 112 is configured to: when the packet assembly manner of the first receiving device is switched from a packet assembly manner that belongs to the first type to a packet assembly manner that belongs to the second type, increase the communication periodicity of the second receiving device; or when the packet assembly manner of the first receiving device is switched from a packet assembly manner that belongs to the second type to a packet assembly manner that belongs to the first type, decrease the communication periodicity of the second receiving device.

In some embodiments, the processing module 112 is further configured to: determine, based on the packet assembly manner of the second receiving device, whether to adjust the communication periodicity of the second receiving device; and when the packet assembly manner of the second receiving device is a packet assembly manner that belongs to the second type, skip adjusting the communication periodicity of the second receiving device; or when the packet assembly manner of the second receiving device is a packet assembly manner that belongs to the first type, perform the step of adjusting the communication periodicity of the second receiving device.

In some embodiments, the at least one second packet includes a second data packet and a second control packet, and the processing module 112 is configured to: when determining to generate the at least one second packet by using the second packet assembly manner, generate the second control packet by using the second packet assembly manner, and generate the second data packet by using the first packet assembly manner; or generate the second data packet by using the second packet assembly manner, and generate the second control packet by using the first packet assembly manner.

In some embodiments, the processing module 112 is further configured to: determine, based on a transmission requirement of a data link and a transmission requirement of a control link respectively, to generate the second data packet and the second control packet by using the second packet assembly manner or the first packet assembly manner. The transmission requirement includes at least one of a real-time transmission requirement or a transmission reliability requirement.

Optionally, the data sending apparatus may further include a storage module 113. The storage module 113 is configured to store a computer program, to implement functions in the foregoing embodiments.

The data sending apparatus provided in this embodiment of this application may be configured to perform the foregoing Bluetooth communication method. For content and effects of the visual localization apparatus, refer to the method part. Details are not described again in this embodiment of this application.

FIG. 12 is a schematic diagram of a structure of a data sending apparatus applicable to Bluetooth communication according to an embodiment of this application. As shown in FIG. 12, the data sending apparatus 1200 may be the electronic device in the foregoing embodiments. The data sending apparatus 1200 includes a processor 1201 and a transceiver 1202.

Optionally, the Bluetooth communication apparatus 1200 further includes a memory 1203. The processor 1201, the transceiver 1202, and the memory 1203 may communicate with each other through an internal connection path, to transfer a control signal and/or a data signal.

The memory 1203 is configured to store a computer program. The processor 1201 is configured to execute the computer program stored in the memory 1203, to implement the functions in the foregoing apparatus embodiment.

Optionally, the memory 1203 may be integrated into the processor 1201, or may be independent of the processor 1201.

Optionally, the data sending apparatus 1200 may further include an antenna 1204, configured to transmit a signal output by the transceiver 1202. Alternatively, the transceiver 1202 receives a signal through the antenna.

Optionally, the data sending apparatus 1200 may further include a power supply 1205, configured to supply power to various components or circuits in an electronic device.

In addition, to improve functions of the electronic device, the data sending apparatus 1200 may further include one or more of an input unit 1206, a display unit 1207 (which may also be considered as an output unit), an audio circuit 1208, a camera lens 1209, a sensor 1210, and the like. The audio circuit may further include a speaker 12081, a microphone 12082, and the like. Details are not described again.

Some other embodiments of this application further provide a computer storage medium. The computer storage medium may include computer instructions. When the computer instructions are run on an electronic device, the electronic device is enabled to perform the steps performed by the sending device in the foregoing method embodiments.

Some other embodiments of this application further provide a computer program product. When the computer program product runs on a computer, the computer is enabled to perform the steps performed by the sending device in the foregoing method embodiments.

Some other embodiments of this application further provide an apparatus. The apparatus has a function of implementing behavior of the electronic device in the foregoing method embodiments. The function may be implemented by hardware or may be implemented by hardware executing corresponding software. The hardware or the software includes one or more modules corresponding to the foregoing functions, for example, a capture unit or module, a sending unit or module, and a display unit or module.

The processor mentioned in the foregoing embodiments may be an integrated circuit chip, and has a signal processing capability. In an implementation process, steps of the foregoing method embodiments may be implemented by using an integrated logic circuit of hardware in the processor or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like. The steps of the methods disclosed with reference to embodiments of this application may be directly performed by a hardware encoding processor, or may be performed by using a combination of hardware and a software module in an encoding processor. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing methods in combination with the hardware of the processor.

The memory in the foregoing embodiments may be a volatile memory or a nonvolatile memory, or may include both a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any memory of another appropriate type.

A person of ordinary skill in the art may be aware that units and algorithm steps in the examples described with reference to the embodiments disclosed in this specification may be implemented by electronic hardware or a combination of computer software and electronic hardware. Whether the functions are performed by hardware or software depends on a particular application and a design constraint condition of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data sending method, comprising:
sending at least one first packet to a first receiving device by using a Bluetooth communication connection, wherein the at least one first packet is generated by using a first packet assembly manner;
determining, based on a receiving status of at least one piece of feedback information sent by the first receiving device, to generate at least one second packet by using the first packet assembly manner or a second packet assembly manner, wherein the at least one piece of feedback information is an acknowledgment or a negative acknowledgment fed back by the first receiving device after receiving the at least one first packet; and
sending the at least one second packet to the first receiving device by using the Bluetooth communication connection, wherein
the first packet assembly manner and the second packet assembly manner comprise any two of the following: channel coding of at least one channel coding level or non-channel coding.

2. The method according to claim 1, wherein the receiving status comprises a received signal strength indicator.

3. The method according to claim 2, wherein the determining, based on a receiving status of at least one piece of feedback information sent by the first receiving device, to generate at least one second packet by using the first packet assembly manner or a second packet assembly manner comprises:
determining, based on the received signal strength indicator of the at least one piece of feedback information within one or more preset time periods and the first packet assembly manner, whether to switch a packet assembly manner to the second packet assembly manner; and
when it is determined not to switch the packet assembly manner to the second packet assembly manner, generating the at least one second packet by using the first packet assembly manner; or
when it is determined to switch the packet assembly manner to the second packet assembly manner, generating the at least one second packet by using the second packet assembly manner.

4. The method according to claim 3, wherein the determining, based on the received signal strength indicator of the at least one piece of feedback information within one or more preset time periods and the first packet assembly manner, whether to switch a packet assembly manner to the second packet assembly manner comprises:
when the received signal strength indicator of the at least one piece of feedback information within the one or more preset time periods is less than a first threshold, and the first packet assembly manner belongs to a first type, determining to switch the packet assembly manner to a packet assembly manner that belongs to a second type; or
when the received signal strength indicator of the at least one piece of feedback information within the one or more preset time periods is greater than a fourth threshold, and the first packet assembly manner belongs to a second type, determining to switch the packet assembly manner to a packet assembly manner that belongs to a first type, wherein
the packet assembly manner that belongs to the first type comprises non-channel coding, and the packet assembly manner that belongs to the second type comprises channel coding at any channel coding level; or the packet assembly manner that belongs to the first type comprises channel coding at a first channel coding level, and the packet assembly manner that belongs to the second type comprises channel coding at a second channel coding level, wherein the first channel coding level is lower than the second channel coding level.

5. The method according to claim 1, wherein the receiving status comprises a packet loss rate or a receiving correctness rate.

6. The method according to claim 5, wherein the determining, based on a receiving status of at least one piece of feedback information sent by the first receiving device, to generate at least one second packet by using the first packet assembly manner or a second packet assembly manner comprises:
determining, based on the packet loss rate or the receiving correctness rate of the at least one piece of feedback information within a plurality of preset time periods and the first packet assembly manner, whether to switch a packet assembly manner to the second packet assembly manner; and
when determining not to switch the packet assembly manner to the second packet assembly manner, generate the at least one second packet by using the first packet assembly manner; or
when it is determined to switch the packet assembly manner to the second packet assembly manner, generating the at least one second packet by using the second packet assembly manner.

7. The method according to claim 6, wherein the determining, based on the packet loss rate or the receiving correctness rate of the at least one piece of feedback information within a plurality of preset time periods and the first packet assembly manner, whether to switch a packet assembly manner to the second packet assembly manner comprises:
when the packet loss rate within each preset time period is greater than a second threshold, and the first packet assembly manner belongs to a first type, determining to switch the packet assembly manner to a packet assembly manner that belongs to a second type; or
when the packet loss rate within each preset time period is less than a fifth threshold, and the first packet assembly manner belongs to a second type, determining to switch the packet assembly manner to a packet assembly manner that belongs to a first type, wherein
the packet assembly manner that belongs to the first type comprises non-channel coding, and the packet assembly manner that belongs to the second type comprises channel coding at any channel coding level; or the packet assembly manner that belongs to the first type comprises channel coding at a first channel coding level, and the packet assembly manner that belongs to the second type comprises channel coding at a second channel coding level, wherein the first channel coding level is lower than the second channel coding level.

8. The method according to claim 6, wherein the determining, based on the packet loss rate or the receiving correctness rate of the at least one piece of feedback information within a plurality of preset time periods and the first packet assembly manner, whether to switch a packet assembly manner to the second packet assembly manner comprises:
when the receiving correctness rate in each preset time period is less than a third threshold, and the first packet assembly manner belongs to a first type, determining to switch the packet assembly manner to a packet assembly manner that belongs to a second type; or
when the receiving correctness rate in each preset time period is greater than a sixth threshold, and the first packet assembly manner belongs to a second type, determining to switch the packet assembly manner to a packet assembly manner that belongs to a first type, wherein
the packet assembly manner that belongs to the first type comprises non-channel coding, and the packet assembly manner that belongs to the second type comprises channel coding; or the packet assembly manner that belongs to the first type comprises channel coding at a first channel coding level, and the packet assembly manner that belongs to the second type comprises channel coding at a second channel coding level, wherein the first channel coding level is lower than the second channel coding level.

9. The method according to any one of claims 1 to 8, wherein when it is determined to generate the at least one second packet by using the second packet assembly manner, the method further comprises:
adjusting a communication periodicity of a second receiving device, wherein the second receiving device is a receiving device synchronized with the first receiving device, the communication periodicity is a time interval between two adjacent third packets sent to the second receiving device, and the third packet and the second packet have same packet content; and
sending at least one third packet to the second receiving device through the Bluetooth communication connection based on the adjusted communication periodicity of the second receiving device.

10. The method according to claim 9, the adjusting a communication periodicity of a second receiving device comprises:
when the packet assembly manner of the first receiving device is switched from a packet assembly manner that belongs to the first type to a packet assembly manner that belongs to the second type, increasing the communication periodicity of the second receiving device; or
when the packet assembly manner of the first receiving device is switched from a packet assembly manner that belongs to the second type to a packet assembly manner that belongs to the first type, decreasing the communication periodicity of the second receiving device, wherein
the packet assembly manner that belongs to the first type comprises non-channel coding, and the packet assembly manner that belongs to the second type comprises channel coding; or the packet assembly manner that belongs to the first type comprises channel coding at the first channel coding level, and the packet assembly manner that belongs to the second type comprises channel coding at the second channel coding level, wherein the first channel coding level is lower than the second channel coding level.

11. The method according to claim 9 or 10, wherein the method further comprises:
determining, based on a packet assembly manner of the second receiving device, whether to adjust the communication periodicity of the second receiving device; and
when the packet assembly manner of the second receiving device is a packet assembly manner that belongs to the second type, skipping adjusting the communication periodicity of the second receiving device; or
when the packet assembly manner of the second receiving device is a packet assembly manner that belongs to the first type, perform the step of adjusting the communication periodicity of the second receiving device.

12. The method according to any one of claims 1 to 11, wherein when it is determined to generate the at least one second packet by using the second packet assembly manner, and the at least one second packet comprises a second data packet and a second control packet, the method further comprises:
generating the second control packet by using the second packet assembly manner, and generating the second data packet by using the first packet assembly manner; or
generating the second data packet by using the second packet assembly manner, and generating the second control packet by using the first packet assembly manner.

13. The method according to claim 12, wherein the method further comprises:
determining, based on a transmission requirement of a data link and a transmission requirement of a control link respectively, to generate the second data packet and the second control packet by using the second packet assembly manner or the first packet assembly manner, wherein
the transmission requirement comprises at least one of a real-time transmission requirement or a transmission reliability requirement.

14. A data sending apparatus, wherein the apparatus comprises:
a transceiver module, configured to send at least one first packet to a first receiving device by using a Bluetooth communication connection, wherein the at least one first packet is generated by using a first packet assembly manner; and
a processing module, coupled to the transceiver module, and configured to: determine, based on a receiving status of at least one piece of feedback information received by the transceiver module and sent by the first receiving device, to generate at least one second packet by using the first packet assembly manner or a second packet assembly manner, wherein the at least one piece of feedback information is an acknowledgment or a negative acknowledgment fed back by the first receiving device after receiving the at least one first packet; and
the transceiver module is further configured to send the at least one second packet to the first receiving device by using the Bluetooth communication connection, wherein
the first packet assembly manner and the second packet assembly manner comprise any two of the following: channel coding of at least one channel coding level or non-channel coding.

15. The apparatus according to claim 14, wherein the receiving status comprises a received signal strength indicator.

16. The apparatus according to claim 15, wherein the processing module is configured to:
determine, based on the received signal strength indicator of the at least one piece of feedback information within one or more preset time periods and the first packet assembly manner, whether to switch a packet assembly manner to the second packet assembly manner; and
when determining not to switch the packet assembly manner to the second packet assembly manner, generate the at least one second packet by using the first packet assembly manner; or
when determining to switch the packet assembly manner to the second packet assembly manner, generate the at least one second packet by using the second packet assembly manner.

17. The apparatus according to claim 16, wherein the processing module is configured to:
when the received signal strength indicator of the at least one piece of feedback information within the one or more preset time periods is less than a first threshold, and the first packet assembly manner belongs to a first type, determine to switch the packet assembly manner to a packet assembly manner that belongs to a second type; and
when the received signal strength indicator of the at least one piece of feedback information within the one or more preset time periods is greater than a fourth threshold, and the first packet assembly manner belongs to a second type, determine to switch the packet assembly manner to a packet assembly manner that belongs to a first type, wherein
the packet assembly manner that belongs to the first type comprises non-channel coding, and the packet assembly manner that belongs to the second type comprises channel coding at any channel coding level; or the packet assembly manner that belongs to the first type comprises channel coding at a first channel coding level, and the packet assembly manner that belongs to the second type comprises channel coding at a second channel coding level, wherein the first channel coding level is lower than the second channel coding level.

18. The apparatus according to claim 14, wherein the receiving status comprises a packet loss rate or a receiving correctness rate.

19. The apparatus according to claim 18, wherein the processing module is configured to:
determine, based on the packet loss rate or the receiving correctness rate of the at least one piece of feedback information within a plurality of preset time periods and the first packet assembly manner, whether to switch a packet assembly manner to the second packet assembly manner; and
when determining not to switch the packet assembly manner to the second packet assembly manner, generate the at least one second packet by using the first packet assembly manner; or
when determining to switch the packet assembly manner to the second packet assembly manner, generate the at least one second packet by using the second packet assembly manner.

20. The apparatus according to claim 19, wherein the processing module is configured to:
when the packet loss rate within each preset time period is greater than a second threshold, and the first packet assembly manner belongs to a first type, determine to switch the packet assembly manner to a packet assembly manner that belongs to a second type; or
when the packet loss rate within each preset time period is less than a fifth threshold, and the first packet assembly manner belongs to a second type, determine to switch the packet assembly manner to a packet assembly manner that belongs to a first type, wherein
the packet assembly manner that belongs to the first type comprises non-channel coding, and the packet assembly manner that belongs to the second type comprises channel coding; or the packet assembly manner that belongs to the first type comprises channel coding at a first channel coding level, and the packet assembly manner that belongs to the second type comprises channel coding at a second channel coding level, wherein the first channel coding level is lower than the second channel coding level.

21. The apparatus according to claim 20, wherein the processing module is further configured to:
when the receiving correctness rate in each preset time period is less than a third threshold, and the first packet assembly manner belongs to a first type, determine to switch the packet assembly manner to a packet assembly manner that belongs to a second type; or
when the receiving correctness rate in each preset time period is greater than a sixth threshold, and the first packet assembly manner belongs to a second type, determine to switch the packet assembly manner to a packet assembly manner that belongs to a first type, wherein
the packet assembly manner that belongs to the first type comprises non-channel coding, and the packet assembly manner that belongs to the second type comprises channel coding; or the packet assembly manner that belongs to the first type comprises channel coding at a first channel coding level, and the packet assembly manner that belongs to the second type comprises channel coding at a second channel coding level, wherein the first channel coding level is lower than the second channel coding level.

22. The apparatus according to any one of claims 14 to 21, wherein the processing module is further configured to:
when determining to generate the at least one second packet by using the second packet assembly manner, adjust a communication periodicity of a second receiving device, wherein the second receiving device is a receiving device synchronized with the first receiving device, the communication periodicity is a time interval between two adjacent third packets sent to the second receiving device, and the third packet and the second packet have same packet content; control, based on the adjusted communication periodicity of the second receiving device, the transceiver module to send at least one third packet to the second receiving device by using the Bluetooth communication connection.

23. The apparatus according to claim 22, wherein the processing module is configured to:
when the packet assembly manner of the first receiving device is switched from a packet assembly manner that belongs to the first type to a packet assembly manner that belongs to the second type, increase the communication periodicity of the second receiving device; or
when the packet assembly manner of the first receiving device is switched from a packet assembly manner that belongs to the second type to a packet assembly manner that belongs to the first type, decrease the communication periodicity of the second receiving device, wherein
the packet assembly manner that belongs to the first type comprises non-channel coding, and the packet assembly manner that belongs to the second type comprises channel coding; or the packet assembly manner that belongs to the first type comprises channel coding at a first channel coding level, and the packet assembly manner that belongs to the second type comprises channel coding at a second channel coding level, wherein the first channel coding level is lower than the second channel coding level.

24. The apparatus according to claim 22 or 23, wherein the processing module is further configured to:
determine, based on a packet assembly manner of the second receiving device, whether to adjust the communication periodicity of the second receiving device; and
when the packet assembly manner of the second receiving device is a packet assembly manner that belongs to the second type, skip adjusting the communication periodicity of the second receiving device; or
when the packet assembly manner of the second receiving device is a packet assembly manner that belongs to the first type, perform the step of adjusting the communication periodicity of the second receiving device.

25. The apparatus according to any one of claims 14 to 24, wherein the at least one second packet comprises a second data packet and a second control packet, and the processing module is configured to:
when determining to generate the at least one second packet by using the second packet assembly manner, generate the second control packet by using the second packet assembly manner, and generate the second data packet by using the first packet assembly manner; or generate the second data packet by using the second packet assembly manner, and generate the second control packet by using the first packet assembly manner.

26. The apparatus according to claim 25, wherein the processing module is further configured to:
determine, based on a transmission requirement of a data link and a transmission requirement of a control link respectively, to generate the second data packet and the second control packet by using the second packet assembly manner or the first packet assembly manner, wherein
the transmission requirement comprises at least one of a real-time transmission requirement or a transmission reliability requirement.

27. A communication system, comprising: a sending device and at least one receiving device that performs Bluetooth communication with the sending device, wherein the sending device is configured to perform the data sending method according to any one of claims 1 to 13.
